# EUROPÄISCHE PATENTSCHRIFT

(11) **EP 2 282 974 B1**
(45) Veröffentlichungstag und Bekanntmachung des Hinweises auf die Patenterteilung: **19.08.2015**
(21) Anmeldenummer: 09731095.7
(22) Anmeldetag: 06.04.2009
(51) Int. Cl.: C02F 1/42, C02F 3/06, C02F 103/42, C02F 101/10, C02F 101/16

(54) **VERFAHREN UND VORRICHTUNG ZUR BIOLOGISCHEN AUFBEREITUNG VON WASSER IN SCHWIMMBECKEN**
METHOD AND DEVICE FOR BIOLOGICAL TREATMENT OF WATER IN SWIMMING POOLS
PROCÉDÉ ET DISPOSITIF POUR LE TRAITEMENT BIOLOGIQUE D EAU DANS DES PISCINES

(30) Priorität: 11.04.2008 AT 5722008
(43) Veröffentlichungstag der Anmeldung: 16.02.2011
(73) Patentinhaber: Biotop Landschaftsgestaltung Gesellschaft M.B.H., 3411 Weidling (AT)
(72) Erfinder: PETRICH, Peter, A-3400 Klosterneuburg (AT)
(74) Vertreter: Vinazzer, Edith
(86) Internationale Anmeldenummer: PCT/EP2009/054069
(87) Internationale Veröffentlichungsnummer: WO 2009/124899

(56) Entgegenhaltungen:
- DE-A1-102005 054 030
- GB-A- 2 366 792
- US-A- 5 897 784
- US-A1- 2006 113 245

## Beschreibung

Die Erfindung betrifft ein *Verfahren zur Aufbereitung von Wasser in Schwimmbecken*, *wobei das Wasser mechanisch und biologisch gereinigt wird und nach der Reinigung dem Schwimmbecken rückgeführt wird, wobei in einem biologischen Filter im Beckenwasser befindliche Trübstoffe zurückgehalten und darin enthaltene organische Stoffe sowie im Beckenwasser gelöste organische Stoffe durch die Tätigkeit von Bakterien mineralisiert werden, wobei der in den organischen Stoffen enthaltene Phosphor zu gelöstem reaktiven Phosphat angebaut wird, welches durch lonentausch adsorptiv gebunden wird. Die Erfindung betrifft ferner eine Vorrichtung zur biologischen Aufbereitung von Wasser in Schwimmbecken mit einer biologischen und einer mechanischen Filtereinrichtung.*

Bei der üblichen Reinigung von Wasser in Schwimmbecken (Swimmingpools) wird das Beckenwasser über einen Bodenablauf und einen Skimmer oder, falls vorhanden, eine Oberflächenrinne, abgeleitet und in einem Filter, insbesondere einem Sandfilter, mechanisch gereinigt. Zusätzlich ist es erforderlich, dem Beckenwasser Desinfektionsmittel, beispielsweise Chlor, zuzusetzen, um die Vermehrung von Krankheitserregern und Algen zu verhindern.

In so genannten Schwimmteichen erfolgt die Wasseraufbereitung hauptsächlich mit Hilfe von Wasserpflanzen und/oder biologischen Filtern. Schwimmteiche erfreuen sich daher zunehmender Beliebtheit. Ein gewisser Nachteil von Schwimmteichen besteht jedoch darin, dass ihr Flächenbedarf relativ groß ist, da die bepflanzte Aufbereitungszone einen Anteil von 25% bis 75% der Wasserfläche einnimmt. Darüber hinaus können in Schwimmteichen unansehnliche Algenblüten auftraten. Manche Benützer von Schwimmteichen sehen einen weiteren Nachteil darin, dass sich in einem derart naturnahen Lebensraum rasch Lebewesen, wie Wasserinsekten oder Amphibien, ansiedeln.

Aus der AT 412 275 B sind ein Verfahren und eine Vorrichtung zur Aufbereitung von Wasser aus Schwimmanlagen bekannt, wobei in einem einzigen Wasserkreislauf das Wasser in zumindest einem ersten Schritt mechanisch vorgereinigt wird und in zumindest einem zweiten Schritt eine biologische Reinigung durchgeführt wird. Das Wasser wird während und zwischen den Reinigungsschritten über Schwerkraft transportiert, das gereinigte Wasser wird der Schwirnmanfage rückgeführt.

Der Erfindung liegt die Aufgabe zugrunde, für Schwimmbecken ein Verfahren und eine Vorrichtung zur Aufbereitung des Beckenwassers zur Verfügung zu stellen, welches weder Chlor noch andere toxische Chemikalien im Beckenwasser erfordert und die Nachteile *bekannter Verfahren und Vorrichtungen* nicht aufweist.

Was das Verfahren betrifft, wird die gestellte Aufgabe erfindungsgemäß dadurch gelöst, *dass in einem* ersten pumpenbetriebenen *Wasserkreislauf oberflâchennahes Beckenwasser ausschließlich mechanische gereinigt bzw. gefiltert wird, und dass in einem* zweiten pumpenbetriebenen *Wasserkreislauf Beckenwasser zuerst den biologischen Filter und anschließend, zur adsorptiven Bindung der Phosphate, einen separaten Anionentauscher passiert.*

Die erfindungsgemäße *Vorrichtung* ist dadurch gekennzeichnet, dass *ein erster pumpenbetriebener Wasserkreislauf für oberflächennahes Beckenwasser vorgesehen ist, welcher das oberflächennahen Beckenwasser, ausschließlich mechanisch filtert, und dass ein zweiter, ebenfalls pumpenbetriebener Wasserkreislauf mit einem mechanisch*/*biologischen Filter und einem diesem nachgeordneten, separaten Anionentauscher vorgesehen ist.*

Die Erfindung ermöglicht daher den Betrieb eines Schwimmbeckens ohne den Einsatz von Chlor oder anderen Desinfektionsmitteln. In dem einen Wasserkreislauf erfolgt die mechanische Reinigung von oberflächennahem Beckenwasser, in dem zweiten Wasserkreislauf ein Zurückhalten von Trübstoffen und eine Mineralisierung von im Beckenwasser befindlichen organischen Stoffen in einem biologischen Filter, wobei der in den organischen Stoffen enthaltene Phosphor zu gelöstem Phosphat abgebaut wird, welches anschließend in einem Anionentauscher adsorptiv gebunden wird. Damit wird im Beckenwasser, das Wachstum von Algen, analog zu natürlichen Seen, durch Phosphorlimitierung weitgehend verhindert.

Die mechanische Reinigung des oberflächennahen Beckenwassers und die Ausführung des zugehörigen Wasserlcreislaufes sind auf vielfältige Weise möglich. Besonders einfach und zugleich sehr wirkungsvoll ist die Maßnahme, das oberflächennahe Beckenwasser durch ein Sieb, insbesondere ein Bogensieb, zu filtern. Siebe halten verlässlich Verunreinigungen zurück und lassen sich leicht reinigen.

Jeder Wasserkreislauf wird von einer eigenen Pumpe betrieben, die bezüglich ihrer Leistung auf die Erfordernisse des jeweiligen Wasserkreislaufes abgestellt wird. Ein besonderer Vorteil der Kombination von biologischem Filter und Anionentauscher im zweiten Wasserkreislauf besteht darin, dass beide Filter nur eine relativ geringe Durchströmung benötigen, sodass eine einzige Pumpe zum Betrieb dieses Kreislaufes ausreicht und keine Zwischenspeicherung von Beckenwasser erforderlich ist.

Bei einer Ausführungsform der Erfindung ist der biologische Filter ein mit angesiedelten Bakterien versehenes feinkörniges Filtermaterial, insbesondere Sand oder poröses Material. Der biologische Filter lässt sich somit auf zweckmäßige und kostengünstige Weise erstellen, eine gegebenenfalls notwendige Reinigung oder ein Austausch sind problemlos möglich.

Bei einer weiteren bevorzugten Ausführung der Erfindung wird der Anionentauscher in einem im Erdboden eingelassenen Behälter untergebracht. Der Anionentauscher kann daher für Wartungsarbeiten leicht zugänglich und zugleich optisch unauffällig positioniert werden. Erforderliche Verbindungsrohre in den Kreisläufen werden vorzugsweise unterirdisch verlegt.

Der biologische Filter kann ebenfalls unauffällig und insbesondere nahe des Schwimmbeckens angeordnet werden. Es bietet sich beispielsweise an, den biologischen Filter unterhalb eines Holzsteges oder dergleichen oder unterirdisch, mit abnehmbarer Abdeckung, anzuordnen.

Die in beiden Wasserkreisläufen vorhandenen Pumpen können auf zweckmäßige und einfache Weise in einem gemeinsamen, im Boden eingelassenen Pumpenschacht untergebracht sein.

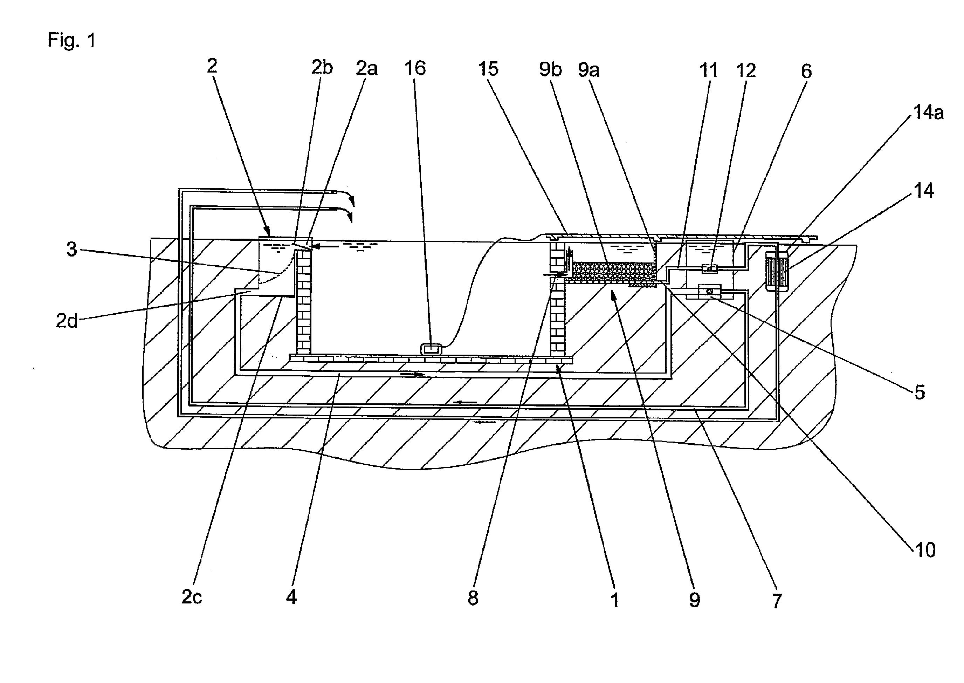

Weitere Merkmale, Vorteile und Einzelheiten der Erfindung werden nun anhand der Zeichnung näher erläutert. Die einzige Figur, Fig. 1, zeigt schematisch eine Ausführungsvariante einer erfindungsgemäßen Vorrichtung.

Fig. 1 zeigt ein Schwimmbecken 1, welches auf herkömmliche Weise, beispielsweise als Betonbecken mit Folienauskleidung, ausgeführt sein kann. Zur Reinigung des Wassers im Schwimmbecken 1 sind zwei separate Wasserkreisläufe vorgesehen, die gleichzeitig betrieben werden.

Der eine Wasserkreislauf dient zur mechanischen Reinigung bzw. Filtration des oberflächennahen Schwimmbeckenwassers. Dieser Kreislauf umfasst bei der dargestellten Ausführungsform der Erfindung einen an das Schwimmbecken 1 nahe der Wasseroberfläche angeschlossenen Skimmer 2, welcher bei der gezeigten Ausführung einen Zulauf 2a mit einer frei schwenkbaren Skimmerklappe 2b, ein Skimmergehäuse 2c, sowie einen Ablauf 2d in dessen unteren Bereich aufweist. Im Gehäuse 2c ist ein Sieb, beispielsweise ein Bogensieb 3, zur Filterung des Schwimmbeckenwassers untergebracht. Eine im Erdboden verlegte Rohrleitung 4 verbindet den Ablauf 2d des Skimmers 2 mit einer Pumpe 5, welche in einem separaten, im Erdboden eingelassenen Pumpenschacht 6 untergebracht ist. Über eine weitere, im Erdboden verlegte Rohrleitung 7 wird das Wasser in das Schwimmbecken 1 zurückgepumpt. In diesem Wasserkreislauf wird daher Wasser von der Wasseroberfläche abgesaugt und in einem Filter bzw. Sieb 3 von Partikeln, Schwebstoffen und dergleichen mechanisch gereinigt. Das gereinigte Wasser kann auf nicht gezeigte Weise über Einströmdüsen dem Beckeninneren zugeführt werden. Ist eine Oberflächenrinne um das Schwimmbecken 1 verlegt, so kann das Wasser aus dieser in einen Behälter/Schacht, in welchem sich ein Sieb/Filter befindet, gesaugt werden. Für diesen Wasserkreislauf ist der Einsatz einer relativ leistungsfähigen Pumpe 5 vorteilhaft. Um elektrische Energie zu sparen, wird die Pumpe 5 vorzugsweise nur wenige Stunden pro Tag in Betrieb genommen.

Im zweiten Wasserkreislauf wird im Schwimmbeckenwasser, analog zu natürlichen Seen, das Wachstum von Algen durch Phosphorlimitierung begrenzt bzw. weitgehend verhindert. Dazu wird das Beckenwasser im zweiten Wasserkreislauf in zwei Schritten aufbereitet. Das Beckenwasser gelangt durch einen in der Beckenwand vorgesehenen Ablauf 8, vorzugsweise unmittelbar, in einen biologischen Filter 9. Der biologische Filter 9 besteht aus einem in den Erdboden eingelassenen, flachen Behälter 9a, welcher bis auf eine gewisse Höhe mit einem feinkörnigen, inerten Filtermaterial 9b, beispielsweise Sand oder poröse Materialien, wie Blähton oder Lavagestein, gefüllt ist. Das über eine zweite, im Pumpenschacht 6 positionierte Pumpe 12 angesaugte Beckenwasser sickert durch das Filtermaterial 9b, wobei Trübstoffe (dies sind die partikulären Verunreinigungen), wie Algen, Detritus- und Schwebstoffe, ausgefiltert werden. Der Filter 9 wirkt somit durch das Zurückhalten der Trübstoffe als mechanischer Filter. Die biologische Filterwirkung des Filtermaterials 9b beruht auf der Tätigkeit von Bakterien. Die Bakterien entwickeln sich von selbst, bilden auf den Kornoberflächen des Filtermaterials einen biologischen Rasen und passen sich, etwas zeitverzögert, der anfallenden Wasserbelastung an.

Die Trübstoffe im Beckenwasser stammen von Einträgen aus der Umgebung, wie Blätter, Staub, Insekten, und von durch Benutzung eingetragenen Verunreinigungen, beispielsweise Hautreste, sowie von den gebildeten organischen Stoffen, wie Algen. Das Beckenwasser enthält ferner als Verunreinigungen gelöste organische Stoffe. Die Trübstoffe werden, wie erwähnt, im Filter 9 zurückgehalten, organische Stoffe -gelöste und partikuläre- werden von den im Filtermaterial angesiedelten Bakterien mineralisiert. Der in diesen organischen Stoffen enthaltene Phosphor wird dabei zu gelöstem Phosphat, im Wesentlichen Orthophosphat (PO₄³⁻) abgebaut. Das gefilterte, durchgesickerte Beckenwasser verlässt den biologischen Filter 9 beim Boden des Behälters 9a über einen Ablauf 10, an welchen eine Rohrleitung 11 anschließt, die zur Pumpe 12 führt. Die Pumpe 12 pumpt das im biologischen Filter 9 gefilterte Beckenwasser zu einem ebenfalls im Boden eingelassenen Behälter 14a, welcher einen Anionentauscher 14 enthält. Der Anionentauscher 14 bindet durch Adsorption die negativen Ionen aus dem Beckenwasser, insbesondere und bevorzugt PO₄³⁻, aber auch Nitrit (NO₂⁻) und Nitrat (NO₃⁻). Dabei wird die Phosphorkonzentration im Beckenwasser auf einen sehr niedrigen Wert, insbesondere auf weniger als 10 µg/l, reduziert, wodurch eine Primärproduktion von Algen bzw. ein Algenwachstum im Beckenwasser weitgehend verhindert wird. Die das Beckenwasser durch den Anionentauscher 14 fördernde Pumpe 12 weist nur eine relativ geringe Leistung auf und läuft permanent. Eine Umwälzzeit für das gesamte Beckenwasser in der Größenordnung von zwei Tagen hat sich als ausreichend erwiesen. Es können daher auch das Volumen und die Fläche des biologischen Filters 9 relativ klein gehalten werden, sodass der Filterbehälter 9a beispielsweise leicht unter einem Holzsteg 15 untergebracht werden kann. Der biologische Filter 9 wird zudem mit einer lichtundurchlässigen Abdeckung versehen, sodass sich keine unerwünschten Algen ansiedeln können. Möglich ist auch eine unterirdische Anordnung des biologischen Filters 9.

Da das Beckenwasser im biologischen Filter 9 gut von Trübstoffen gereinigt wird, braucht der nachgeordnete Anionentauscher 14 nur selten rückgespült zu werden. Der Anionentauscher 14 wird nach einer gewissen Betriebsdauer, sobald er mit Phosphat gesättigt ist, ausgetauscht.

Ein besonderer Vorteil der Kombination von biologischem Filter 9 und Anionentauscher 14 liegt darin, dass beide Filter nur eine relativ geringe Durchströmung benötigen, der biologische Filter 9, damit die biologischen Prozesse optimal ablaufen und der biologische Rasen nicht abgeschwemmt wird, und der Anionentauscher 14, weil eine gewisse Kontaktzeit für die Adsorption erforderlich ist. Somit können beide Komponenten 9, 14 mit der gleichen hydraulischen Durchströmung beschickt werden.

Zur Reinigung des Beckenbodens und der Beckenwände kann ein herkömmlicher Poolroboter eingesetzt werden, welcher in relativ kurzen Abständen, beispielsweise täglich, in Betrieb genommen wird. Durch den Einsatz eines Roboters kann der Aufwuchs von fädigen Algen an den Beckenwänden wirkungsvoll verhindert werden.

Durch Entnahme von Proben, insbesondere von Wasser im Becken, aus dem Ablauf des Anionentauschers und unmittelbar nach dem biologischen Filter, können die Phosphorkonzentration, der pH-Wert, die Sauerstoffkonzentration und andere Parameter ständig überwacht werden.

Die Erfindung ist auf die dargestellte und die beschriebenen Ausführungform/en nicht beschränkt. Es sind andere Skimmertypen als der beschriebene verwendbar. Der biologische Filter kann auch als Tropffilter oder Mikrofaserfilter ausgeführt sein.

### BEZUGSZIFFERNLISTE

- 1: Schwimmbecken
- 2: Skimmer
- 2a: Zulauf
- 2b: Skimmerklappe
- 2c: Gehäuse
- 2d: Ablauf
- 3: Sieb
- 4: Rohrleitung
- 5: Pumpe
- 6: Pumpenschacht
- 7: Rohrleitung
- 8: Ablauf
- 9: biologischer Filter
- 9a: Behälter
- 9b: Filtermaterial
- 10: Ablauf
- 11: Rohrleitung
- 12: Filterpumpe
- 14: Anionenfilter
- 14a: Behälter
- 15: Holzsteg

## Patentansprüche

1. Verfahren zur Aufbereitung von Wasser in Schwimmbecken, wobei das Wasser mechanisch und biologisch gereinigt wird und nach der Reinigung dem Schwimmbecken rückgeführt wird, wobei in einem biologischen Filter (9) im Beckenwasser befindliche Trübstoffe zurückgehalten und darin enthaltene organische Stoffe sowie im Beckeriwasser gelöste organische Stoffe durch die Tätigkeit von Bakterien mineralisiert werden, wobei der in den organischen Stoffen enthaltene Phosphor zu gelöstem reaktiven Phosphat abgebaut wird, welches durch Ionentausch adsorptiv gebunden wird,
**dadurch gekennzeichnet,**
**dass** in einem ersten Wasserkreislauf oberflächennahes Beckenwasser, ausschließlich mechanisch gereinigt bzw. gefiltert wird, dass in einem zweiten Wasserkreislauf Beckenwasser zuerst den biologischen Filter (9) und anschließend, zur adsorptiven Bindung der Phosphate, einen separaten Anionentauscher (14) passiert, und dass jeder Wasserkreislauf von einer Pumpe betrieben wird.

2. Verfahren nach Anspruch 1, **dadurch gekennzeichnet, dass** im ersten Wasserkreislauf das oberflächennahe Beckenwasser durch ein Sieb (3), insbesondere ein Bogensieb, gefiltert wird.

3. Vorrichtung zur biologischen Aufbereitung von Wasser in Schwimmbecken mit einer biologischen und einer mechanischen Filtereinrichtung,
**dadurch gekennzeichnet,**
**dass** ein erster pumpenbetriebener (5) Wasserkreislauf für oberflächennahes Beckenwasser vorgesehen ist, welcher das oberflächennahe Beckenwasser ausschließlich mechanisch filtert,
und **dass** ein zweiter, ebenfalls pumpenbetriebener (12) Wasserkreislauf mit einem biologischen Filter (9) und einem diesem nachgeordneten, separaten Anionentauscher (14) vorgesehen ist.

4. Vorrichtung nach Anspruch 3,
**dadurch gekennzeichnet, dass** im ersten Wasserkreislauf als mechanische Filtereinrichtung ein Sieb (3), insbesondere ein Bogensieb, vorgesehen ist.

5. Vorrichtung nach Anspruch 3,
**dadurch gekennzeichnet, dass** der biologische Filter (9) ein mit angesiedelten Bakterien versehenes feinkörniges Filtermaterial, insbesondere Sand oder poröse Materialien, wie Blähton oder Lavagestein, aufweist.

6. Vorrichtung nach Anspruch 3,
**dadurch gekennzeichnet, dass** der Anionentauscher (14) in einem im Erdboden eingelassenen Behälter (14a) untergebracht ist.

7. Vorrichtung nach Anspruch 3 oder 5,
**dadurch gekennzeichnet, dass** der biologische Filter (9) von einem Holzsteg (15) abgedeckt oder unterirdisch angeordnet ist.

8. Vorrichtung nach einem der Anspruche 3 bis 7,
**dadurch gekennzeichnet, dass** die in beiden Wasserkreisläufen vorhandenen Pumpen (5, 12) in einem gemeinsamen, im Boden eingelassenen Pumpenschacht (6) untergebracht sind.

## Claims

1. Method for treating water in swimming pools, whereby the water is cleaned mechanically and biologically and is returned to the swimming pool after cleaning, whereby impurities contained in the pool water are retained by a biological filter (9) and organic substances included therein as well as organic substances dissolved in the pool water are mineralised through the activity of bacteria, whereby the phosphorous contained in the organic substances is degraded to dissolved reactive phosphate, adsorptively bound by means of ion exchange,
**characterised in that**
pool water near the surface is only cleaned mechanically or filtered during a first water cycle,
pool water first passes through the biological filter (9) and then, for the adsorptive binding of phosphates, passes through a separate anion exchanger (14) during a second water cycle,
and **in that** each water cycle is operated by a pump.

2. Method according to claim 1, **characterised in that** pool water near the surface is filtered through a sieve (3), in particular a curved sieve, during the first water cycle.

3. Device for the biological treatment of water in swimming pools, with a biological and mechanical filter means,
**characterised in that**
a first pump operated (5) water cycle is envisaged for pool water near the surface, which filters pool water near the surface only mechanically,
and **in that** a second, also pump operated (12) water cycle with a biological filter (9) and a separate anion exchanger (14) located downstream of the same is envisaged.

4. Device according to claim 3, **characterised in that** a sieve (3), in particular a curved sieve, is envisaged as a mechanical filter means during the first water cycle.

5. Device according to claim 3, **characterised in that** the biological filter (9) comprises a fine grained filter material, in particular sand or porous materials such as foamed clay or lava rock, populated with bacteria.

6. Device according to claim 3, **characterised in that** the anion exchanger (14) is installed in a container (14a) lowered into the ground.

7. Device according to claim 3 or 5, **characterised in that** the biological filter (9) is covered by means of a boardwalk (15), or is located below ground.

8. Device according to one of the claims 3 to 7, **characterised in that** the pumps (5, 12) provided in both water cycles are installed in a common pump shaft (6) located underground.

## Revendications

1. Procédé de traitement de l'eau dans des piscines, l'eau étant nettoyée mécaniquement et biologiquement et ramenée à la piscine après avoir été nettoyée, des turbidités situées dans l'eau de piscine étant retenues dans un filtre biologique (9) et les substances organiques contenues dedans ainsi que les substances organiques dissoutes dans l'eau de piscine étant minéralisées sous l'action de bactéries, le phosphore contenu dans les substances organiques étant éliminé en phosphore réactif dissout, lequel est lié par adsorption après échange d'ions,
**caractérisé en ce que** de l'eau de piscine superficielle est nettoyée ou filtrée uniquement de manière mécanique dans un premier circuit d'eau, que l'eau de piscine passe tout d'abord à travers le filtre biologique (9) dans un deuxième circuit d'eau puis un échangeur d'anions (14) à part en vue de lier par adsorption les phosphates, et que chaque circuit d'eau est actionné par une pompe.

2. Procédé selon la revendication 1, **caractérisé en ce que** l'eau superficielle de piscine est filtrée dans un premier circuit d'eau à travers un tamis (3), en particulier un tamis cintré.

3. Dispositif de traitement biologique de l'eau de piscine avec un équipement de filtrage mécanique et biologique, **caractérisé en ce qu'**un premier circuit d'eau à actionnement à pompe (5) est destiné à l'eau superficielle de piscine, ledit circuit filtre l'eau superficielle de piscine uniquement de manière mécanique, et que un deuxième circuit d'eau également à actionnement à pompe (12) est prévu avec un filtre biologique (9) et un échangeur d'anions (14) à part placé en aval dudit filtre.

4. Dispositif selon la revendication 3, **caractérisé en ce qu'**un tamis (3), en particulier un tamis cintré, est prévu dans le premier circuit d'eau comme équipement de filtrage mécanique.

5. Dispositif selon la revendication 3, **caractérisé en ce que** le filtre biologique (9) présente un matériel de filtrage à grains fins comportant des bactéries implantées, en particulier du sable ou des matériaux poreux, tels que de l'argile expansée ou de la roche volcanique.

6. Dispositif selon la revendication 3, **caractérisé en ce que** l'échangeur d'anions (14) est placé dans un récipient (14a) intégré dans le sol.

7. Dispositif selon la revendication 3 ou 5, **caractérisé en ce que** le filtre biologique (9) est recouvert d'une passerelle en bois (15) ou disposé sous terre.

8. Dispositif selon l'une des revendications 3 à 7, **caractérisé en ce que** les pompes (5, 12) situées dans les deux circuits d'eau sont disposées ensemble dans un puits de pompage (6) intégré dans le sol.
